Europäisches Patentamt

(19) European Patent Office

Office européen des brevets

(11) Numéro de publication: **0 002 235**
**B1**

(12) **FASCICULE DE BREVET EUROPEEN**

(45) Date de publication du fascicule de brevet:
**28.01.81**

(21) Numéro de dépôt: **78101446.9**

(22) Date de dépôt: **23.11.78**

(51) Int. Cl.³: **B 01 D 53/26,** B 01 D 45/16,
F 16 T 1/00

(54) **Séparateur vertical d'un mélange de vapeur et de liquide.**

(30) Priorité: **30.11.77 FR 7736095**

(43) Date de publication de la demande:
**13.06.79 Bulletin 79/12**

(45) Mention de la délivrance du brevet:
**28.01.81 Bulletin 81/4**

(84) Etats contractants désignés:
**BE CH DE FR GB SE**

(56) Documents cités:
**FR-A-1 535 853**
**US-A-3 884 658**

(73) Titulaire: **STEIN INDUSTRIE Société anonyme dite:,**
**19-21, Avenue Morane Saulnier B.P. 74, F-78140 Velizy**
**Villacoublay (FR)**
Demandeur: **ELECTRICITE DE FRANCE Service National,**
**2, rue Louis Murat, F-75008 Paris (FR)**

(72) Inventeur: **Marjollet, Jacques, 37, Quai de Valmy,**
**F-75010 Paris (FR)**
Inventeur: **Tondeur, Gérard, 2, rue du Capitaine Fonck,**
**F-78140 Velizy Villacoublay (FR)**
Inventeur: **Cerdan, Jean-Pierre, 5, rue de la Sente de**
**Chatou, F-78800 Houilles (FR)**
Inventeur: **Talleu, Patrick, 15, rue Esther Lacroix,**
**F-78400 Chatou (FR)**

(74) Mandataire: **Weinmiller, Jürgen et al, Zeppelinstrasse 63,**
**D-8000 München 80 (DE)**

ACTORUM AG.

## Séparateur vertical d'un mélange de vapeur et de liquide

La présente invention concerne un séparateur vertical d'un mélange de vapeur et de liquide, comprenant à l'intérieur d'une virole externe une enceinte d'admission du mélange vapeur-liquide, une pluralité de tubes verticaux munis à leur entrée d'aubes fixes imprimant au mélange un mouvement hélicoïdal, et à leur sortie d'un tube coaxial de plus faible diamètre permettant dans son conduit interne l'évacuation de vapeur sèche et dans l'espace annulaire celle d'un mélange plus riche en liquide, ledit espace annulaire débouchant dans un volume libre permettant la séparation dudit mélange plus riche en liquide en une vapeur sensiblement sèche et en un liquide encore chargé de vapeur, et lesdits conduits internes débouchant dans une chambre de recueil de vapeur sèche.

Elle s'applique en particulier aux séparateurs de vapeur d'eau humide en vapeur sèche et eau résiduelle, notamment pour centrale de production d'énergie électrique.

Les sécheurs à séparation dans des tubes par effet de centrifugation présentent l'avantage d'un faible encombrement par rapport au débit de vapeur à traiter, et peuvent donc être disposés directement à la sortie des dispositifs générateurs d'humidité dans la vapeur, tels que des turbines de détente, en éliminant ou réduisant les longueurs de tuyauteries transportant de la vapeur humide, et soumises par suite au phénomène d'érosion-corrosion. Ils permettent d'obtenir une vapeur sèche de faible teneur résiduaire en eau, de l'ordre de 0,1%, et par suite de réduire au maximum les volumes d'eau retenus dans les circuits de vapeur, et susceptibles de se vaporiser au cours de chutes de pression de la vapeur, en abaissant sa température et réduisant le rendement thermodynamique. Cependant l'eau séparée est encore mélangée de vapeur, et même si elle débouche dans une chambre permettant une certaine séparation par gravité, celle-ci est imparfaite. L'eau qui ruisselle entraîne encore une certaine quantité de vapeur qui est perdue pour le cycle thermodynamique, ce qui réduit le rendement des appareils en aval (turbines de détente, échangeurs). La vapeur qui s'élève dans cette chambre entraîne encore des gouttelettes d'eau, de sorte qu'elle est difficilement utilisable sans précaution, et risque notamment de provoquer des corrosions sur son circuit ou de nécessiter l'emploi de tuyauteries en acier inoxydable coûteuses.

La présente invention a pour but de remédier aux inconvénients ci-dessus, et de procurer un séparateur vertical qui permette d'obtenir d'une part une vapeur sèche de faible teneur résiduaire en eau, et d'autre part une fraction complémentaire de vapeur débarrassée de la plus grande partie de l'eau résiduaire, et ne contenant plus que quelques pour cent d'eau, utilisable dans des circuits thermodynamiques et ne produisant pas d'érosion-corrosion sensible dans les tuyauteries.

Le séparateur vertical selon l'invention est caractérisé en ce qu'il comporte en outre un rebord annulaire permettant à la vapeur encore contenue dans le liquide de s'échapper vers le haut par un passage annulaire périphérique entre ledit rebord annulaire et la virole externe.

Il répond en outre de préférence à au moins l'une des caractéristiques suivantes:

– ledit passage annulaire périphérique comporte au moins une brusque augmentation de section droite, et en aval du point de cette brusque augmentation de section droite des moyens de recueil du liquide rassemblé à la suite de la détente de la vapeur encore humide.

– il comprend une plaque perforée horizontale disposée sur le trajet de la vapeur ascendante sensiblement sèche séparée à la sortie des espaces annulaires entre tubes coaxiaux, et formant entretoise pour les tubes verticaux de plus grand diamètre.

– les tubes coaxiaux de plus faible diamètre sont fixés à une plaque tubulaire inférieure, elle-même solidaire de la chambre de recueil de vapeur sèche, supportée par des consoles fixées à une virole externe.

– il comprend un récipient de réception de l'eau séparée intégré à l'intérieur de la virole.

L'invention est décrite ci-après plus en détail à l'aide des deux exemples et en référence aux figures du dessin annexé.

La fig. 1 représente une coupe en élévation avec arrachement partiel de certains éléments, d'un séparateur selon l'invention.

La fig. 2 représente en élévation avec arrachement de la partie inférieure de la virole externe une variante du séparateur selon la fig. 1.

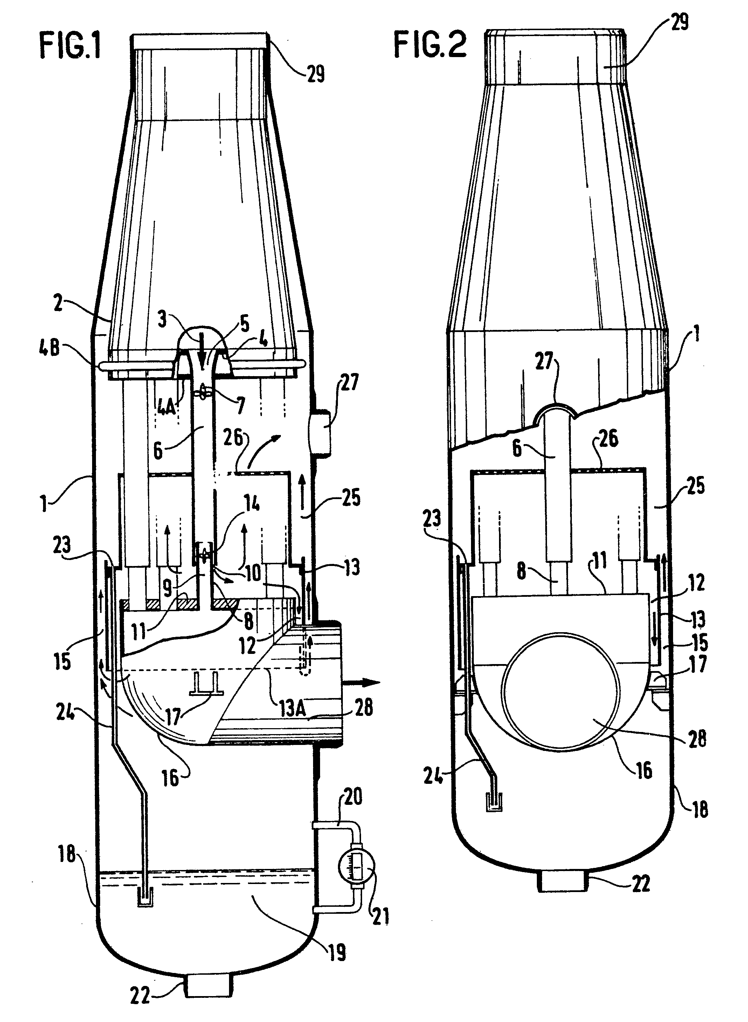

Dans la fig. 1, le séparateur comprend une virole externe 1, à l'entrée tubulaire 29 de laquelle est soudée une manchette 2 d'abord cylindrique, puis conique, d'accès à des tubes séparateurs 6. La vapeur, contenant par exemple 10% d'eau, pénètre du haut vers le bas dans le sens d'une flèche 3 dans les tubes séparateurs 6. Les ouvertures d'accès sont constituées par des formes embouties reliant des sections droites d'entrée ménagées dans une première plaque 4 à des sections droites circulaires correspondant à celles des tubes dans une seconde plaque 4A. Les tubes, dont un seul est représenté en coupe, comportent à leur entrée des aubes fixes 7 imprimant à la vapeur humide un mouvement hélicoïdal. Dans l'extrémité inférieure des tubes 6 s'engagent des tubes 8 de diamètre légèrement plus faible. Le mouvement hélicoïdal de la vapeur humide produit le dépôt des gouttelettes d'humidité sur la paroi interne du tube 6, puis leur ruissellement vers le bas le long de cette paroi. La vapeur sèche subsistant dans la zone centrale du tube est évacuée par le conduit interne 9 des tubes 8, cependant que l'eau séparée mélangée de vapeur s'évacue dans l'espace annulaire 10 entre les tubes 6 et 8. A la sortie de cet espace, le mélange d'eau et de vapeur, par exemple à 50% d'eau, subit une nouvelle séparation, l'eau s'écoulant vers la périphérie sur une plaque tubulaire 11, cependant que de la vapeur s'échappe vers le haut, comme indiqué par des flèches dirigées vers le haut. L'eau de ruissellement s'écoule ensuite vers le bas dans l'espace annulaire 12 entre une enveloppe cylindrique 13, fixée à une chambre de recueil 16 par des moyens non représentés, et l'extérieur de la chambre de recueil de la vapeur sèche 16. Parvenue au bord inférieur 13A de l'enveloppe 13, l'eau se sépare à nouveau de la vapeur résiduelle qu'elle contenait encore. Tandis que l'eau s'écoule par gravité vers le fond 18 de la virole externe 1 pour y constituer un bain 19, la vapeur remonte dans un passage annulaire 15 entre la virole externe 1 et l'enveloppe 13. Ce passage annulaire 15 subit au niveau d'un épaulement 23 de l'enveloppe 13 une augmentation brusque de section droite. Celle-ci entraîne un éclatement du mélange de vapeur et de gouttelettes d'eau entraînées. Une grande partie de l'eau est recueillie sur l'épaulement 23 et évacuée par des tubes tels que 24 vers le bain 19. La vapeur subsistante monte par une chambre 25 et se réunit à la vapeur séparée au-dessus de la plaque tubulaire 11, en débit relatif réglé par une plaque perforée 26, formant entretoise pour les tubes 6, pour être évacuée avec elle par une tubulure latérale 27, à une teneur en humidité de quelques pourcent, vers l'utilisation.

La vapeur sèche séparée à l'intérieur des tubes 8, de teneur résiduelle en humidité de l'ordre de 0,1%, voit son mouvement hélicoïdal annulé par des aubes fixes 14, de sens giratoire opposé à celui des aubes 7, se rassemble dans la chambre de vapeur sèche 16, puis est envoyée à l'utilisation par une tubulure latérale 28. Les structures internes reposent par l'intermédiaire de la chambre 16 sur des supports latéraux ou consoles 17, mieux visibles en fig. 2.

L'eau rassemblée dans le fond 18 de la virole 1 y constitue le bain 19 dont le niveau est réglé par un appareil de contrôle 21 associé à un niveau d'eau 20. L'appareil de contrôle de niveau 21 commande une vanne (non représentée) disposée sur la tuyauterie d'évacuation reliée à une tubulure 22, de façon à maintenir constant le niveau du bain 19.

Les dilatations thermiques de la partie interne du séparateur sont absorbées par un soufflet de dilatation 4B disposé entre la plaque solidaire des tubes et la manchette 2.

Le séparateur représenté en fig. 2 est en grande partie identique à celui de la fig. 1, et les éléments communs ne seront donc pas décrits à nouveau. Il est par ailleurs vu, non pas de face comme celui de la fig. 1, mais latéralement, (vue de la droite de la fig. 1). Mais il ne comporte pas de fond pour le recueil d'un bain de liquide, de sorte qu'il est d'une hauteur plus faible. L'eau séparée est évacuée directement par la tubulure 22 vers une bâche de condensat.

Le dispositif d'élimination de l'humidité résiduelle par brusque augmentation de la section de passage dans l'espace annulaire peut être remplacé par un autre, tel que des chicanes, qui procurerait le même résultat. L'espace annulaire peut comporter plusieurs dispositifs d'élimination de l'humidité résiduelle à des niveaux successifs.

## Revendications

1. Séparateur vertical d'un mélange de vapeur et de liquide, comprenant à l'intérieur d'une virole externe (1) une enceinte d'admission du mélange vapeur-liquide, une pluralité de tubes verticaux (6) munis à leur entrée d'aubes fixes (7) imprimant au mélange un mouvement hélicoïdal, et à leur sortie d'un tube coaxial (8) de plus faible diamètre permettant dans son conduit interne (9) l'évacuation de vapeur sèche et dans l'espace annulaire (10) celle d'un mélange plus riche en liquide, ledit espace annulaire débouchant dans un volume libre permettant la séparation dudit mélange plus riche en liquide en une vapeur sensiblement sèche et en un liquide encore chargé de vapeur, et lesdits conduits internes (9) débouchant dans une chambre de recueil de vapeur sèche (16), caractérisé en ce qu'il comporte en outre un rebord annulaire (13A) permettant à la vapeur encore contenue dans le liquide de s'échapper vers le haut par un passage annulaire périphérique (15) entre ledit rebord annulaire et la virole externe (1).

2. Séparateur vertical selon la revendication 1, caractérisé en ce que ledit passage annulaire périphérique (15) comporte au moins une brusque augmentation de section droite, et en aval de cette brusque augmentation de section droite des moyens (23) de recueil du liquide rassemblé à la suite de la détente de la vapeur encore humide.

3. Séparateur vertical selon l'une des revendications 1 et 2, caractérisé en ce qu'il comprend une plaque perforée horizontale (26) disposée sur le trajet de la vapeur ascendante sensiblement sèche séparée à la sortie de l'espace annulaire (10) entre les tubes coaxiaux (6, 8), et formant entretoise pour les tubes verticaux de plus grand diamètre (6).

4. Séparateur vertical selon l'une des revendications 1 à 3, caractérisé en ce que les tubes coaxiaux (8) de plus faible diamètre sont fixés à une plaque tubulaire inférieure (11) elle-même solidaire de la chambre (16) de recueil de vapeur sèche, supportée par des consoles (17) fixées à la virole externe (1).

5. Séparateur vertical selon l'une des revendications 1 à 4, caractérisé en ce qu'il comprend un récipient de réception de l'eau séparée intégré à l'intérieur de la virole (1).

## Patentansprüche

1. Senkrechtstehender Separator für ein Dampf-Flüssigkeits-Gemisch, der im Inneren eines Aussengehäuses (1) eine Einlasskammer für das Dampf-Flüssigkeits-Gemisch aufweist, mit einer Vielzahl vertikaler Rohre (6), die an ihrem Eingang mit feststehenden Schaufeln (7) versehen sind, die dem Gemisch eine Schraubenbewegung verleihen, und an ihrem Ausgang ein koaxiales Rohr (8) mit geringerem Durchmesser aufweisen, das in seinem inneren Kanal (9) das Entweichen trockenen Dampfes und im Ringbereich (10) das Entweichen eines stärker mit Flüssigkeit angereicherten Gemischs ermöglicht, wobei der Ringbereich (10) in einen freien Raum mündet, der die Trennung des flüssigkeitsreicheren Gemischs in einen im wesentlichen trockenen Dampf und eine noch mit Dampf angereicherte Flüssigkeit ermöglicht, und wobei die inneren Kanäle (9) in eine Auffangkammer (16) für den Trockendampf münden, dadurch gekennzeichnet, dass er ausserdem noch einen ringförmigen Rand (13A) aufweist, der den noch in der Flüssigkeit vorhandenen Dampf durch einen ringförmigen peripheren Durchgang (15) zwischen dem ringförmigen Rand und dem äusseren Gehäuse (1) nach oben entweichen lässt.

2. Senkrechtstehender Separator nach Anspruch 1, dadurch gekennzeichnet, dass der ringförmige periphere Durchgang (15) mindestens eine plötzliche Querschnittsvergrösserung und stromabwärts dieser plötzlichen Querschnittsvergrösserung Mittel (23) zum Auffangen der nach dem Ausdehnen des noch nassen Dampfes gesammelten Flüssigkeit aufweist.

3. Senkrechtstehender Separator nach einem der Ansprüche 1 und 2, dadurch gekennzeichnet, dass er eine waagerechte perforierte Platte (26) aufweist, die im Weg des aufsteigenden im wesentlichen trockenen Dampfes, der am Ausgang des ringförmigen Bereichs (10) zwischen den koaxialen Rohren (6, 8) abgeschieden wird, angeordnet ist und für die senkrechten Rohre grösseren Durchmessers (6) ein Stützblech bildet.

4. Senkrechtstehender Separator nach einem der Ansprüche 1 bis 3, dadurch gekennzeichnet, dass die koaxialen Rohre (8) kleineren Durchmessers an einer unteren rohrförmigen Platte (11) befestigt sind, die selbst mit der Kammer (16) zum Auffangen des trockenen Dampfes fest verbunden und von Stützen (17), die am Aussengehäuse (1) befestigt sind, gehalten wird.

5. Senkrechtstehender Separator nach einem der Ansprüche 1 bis 4, dadurch gekennzeichnet, dass er einen Auffangbehälter für das abgeschiedene Wasser aufweist, der in das Innere des Gehäuses integriert ist.

**Claims**

1. A vertical separator for a mixture of vapour and liquid, comprising inside an outer casing (1) an inlet chamber for the vapour-liquid mixture, a plurality of vertical tubes (6) provided at their inlet with fixed vanes (7) which make the mixture flow helically, and at their output with a coaxial tube (8) of smaller diameter allowing in its inner channel (9) the evacuation of dry vapour and in the annular space (10) the evacuation of a mixture with increased liquid content, said annular space (10) communicating with a free space which allows the separation of said mixture with increased liquid content into substantially dry vapour and a liquid which still contains some vapour, and said inner channels (9) communicating with a dry vapour collecting chamber (16), characterized by the fact that it further includes an annular edge (13A) which allows the vapour which is still contained in the liquid to escape upwards through an annular peripheral passage (15) between said annular edge and the outer casing (1).

2. A vertical separator according to claim 1, characterized by the fact that said annular peripheral passage (15) includes at least one sudden increase in the cross-section and, downstream of this sudden increase in the cross-section, means (23) for collecting the liquid which gathers subsequent to the sudden expansion of the wet vapour.

3. A vertical separator according to claim 1 or 2, characterized by the fact that it includes a horizontal perforated plate (26) disposed on the path of the substantially dry rising vapour which is separated at the outlet of the annular space (10) between the coaxial tubes (6, 8) and which forms a distance piece for the vertical tubes of greater diameter (6).

4. A vertical separator according to one of the claims 1 to 3, characterized by the fact that the coaxial tubes (8) of smaller diameter are fixed to a lower tubular plate (11) which is itself integral with the dry vapour collecting chamber (16) and is supported by brackets (17) fixed to the outer casing (1).

5. A vertical separator according to one of the claims 1 to 4, characterized by the fact that it includes a receptacle for collecting the separated liquid, said receptacle being integral with the inside of the casing (1).

# FIG.1

# FIG.2